# EUROPÄISCHE PATENTSCHRIFT

(11) **EP 1 935 224 B1**
(45) Veröffentlichungstag und Bekanntmachung des Hinweises auf die Patenterteilung: **19.08.2015**
(21) Anmeldenummer: 07018696.0
(22) Anmeldetag: 24.09.2007
(51) Int. Cl.: A01B 73/04, A01B 73/06

(54) **Gezogenes landwirtschaftliches Arbeitsgerät grosser Arbeitsbreite**
Towed agricultural implement with a wide working width
Engin agricole tracté à largeur de travail plus grande

(30) Priorität: 20.12.2006 DE 102006060280; 18.04.2007 DE 102007018295
(43) Veröffentlichungstag der Anmeldung: 25.06.2008
(73) Patentinhaber: Amazonen-Werke H. Dreyer GmbH & Co. KG, 49205 Hasbergen (DE)
(72) Erfinder: Pokriefke, Michael, 27798 Hude (DE); Reinke, Wilfried, 26123 Oldenburg (DE); van Zoest, Ralf, 49767 Twist (DE)

(56) Entgegenhaltungen:
- EP-A- 1 731 012
- WO-A-2006/004538
- US-A1- 2001 008 185

## Beschreibung

Die Erfindung betrifft ein gezogenes landwirtschaftliches Arbeitsgerät großer Arbeitsbreiten gemäß des Oberbegriffes des Patentanspruches 1.

Derartige landwirtschaftliche Arbeitsgeräte sind in der Praxis bekannt geworden, wie beispielsweise die DE 19 15 825 zeigt. Diese gezogenen Arbeitsgeräte weisen eine große Arbeitsbreite auf und werden zum Zwecke des Transportes derart eingeklappt, indem die Seitenrahmen zunächst senkrecht gestellt werden und dann um eine weitere Achse ebenfalls in Richtung oder entgegen der Fahrtrichtung zur Schaffung einer schmalen Arbeitsbreite für das gezogene landwirtschaftliche Gerät eingeschwenkt werden. Zwischenzeitlich weisen diese Geräte jedoch nicht nur in Arbeitsrichtung eine große sich erstreckende Tiefe auf, sondern insbesondere wenn es sich um Sämaschinen handelt, die einen Vorratsbehälter aufweisen, bei denen die Seitenrahmen seitlich des Vorratsbehälters in Transportstellung sich befinden, eine derartige Breite auf, die über das für den Transport auf öffentlichen Straßen und Wegen hinausgehende Maß sich erstreckt.

Ein weiteres Arbeitsgerät ist durch die US 2001/008185 A1 bekannt geworden. Dieses Gerät zeigt ein Bodenbearbeitungsgerät, welches Seitenrahmen aufweist, die einschwenkbar angeordnet sind. Zur Verringerung der Transporthöhe können die den Bodenbearbeitungswerkzeugen zugeordneten scheibenartigen Rollen eingezogen werden.

Der Erfindung liegt die Aufgabe zugrunde, die Transportbreite von Arbeitsgeräten großer Arbeitsbreiten mit deren eingeklappten und in Transportstellung und in Fahrtrichtung sich erstreckenden Seitenrahmen auf einfache Weise unter das gesetzlich zulässige Transportbreitenmaß zu bringen.

Diese Aufgabe wird erfindungsgemäß durch die kennzeichnenden Merkmale des Patentanspruches 1 gelöst. Infolge dieser Maßnahmen werden die Bodenbearbeitungs- und Säelemente sowie die Tiefenführungselemente in Richtung des Seitenrahmens in einziehbarer Weise angeordnet, um so das Breitenmaß für den Transport des Arbeitsgerätes zu reduzieren und innerhalb des gesetzlich zulässigen Breitenmaßes für den Transport von landwirtschaftlichen Arbeitsmaschinen auf öffentlichen Strassen und Wegen zulässigen Gesamtbreitenmaß zu bringen. Somit wird in einfacher Weise für Arbeitsgeräte großer Arbeitsbreiten eine kompakte Form der Maschine für den Transport innerhalb der gesetzlich zulässigen Breiten ermöglicht.

In einfacher Weise lassen sich die Laufräder dadurch verstellen, dass die Laufräder jeweils mittels einer Schwinge über eine Gelenkanordnung am Seitenrahmen angeordnet sind, dass zwischen den Schwingen und den Seitenrahmen Einstellorgane angeordnet sind.

Um die Bodenbearbeitungs- oder Säelemente sowie die Tiefenführungselemente in einfachster Weise verstellen zu können, ist vorgesehen, dass die den Bodenbearbeitungs-und/oder Säelementen und den Tiefenführungselementen zugeordneten Stellelemente und Einstellorgane als motorische Mittel ausgebildet sind.

Weitere Einzelheiten der Erfindung sind den übrigen Unteransprüchen, der Beispielsbeschreibung und den Zeichnungen zu entnehmen. Hierbei zeigen
- Fig. 1: das gezogene landwirtschaftliche Arbeitsgerät in Arbeitsstellung und in Seitenansicht,
- Fig. 2: das Arbeitsgerät in Arbeitsstellung und in Draufsicht,
- Fig. 3: das Arbeitsgerät in Arbeitsstellung und in der Ansicht von hinten,
- Fig. 4: das Arbeitsgerät mit hochgeschwenkten Heckrahmen in Seitenansicht,
- Fig. 5: das Arbeitsgerät mit hochgeschwenkten Heckrahmen und eingeklappten oberen Teilelementen der Seitenrahmen in Seitenansicht,

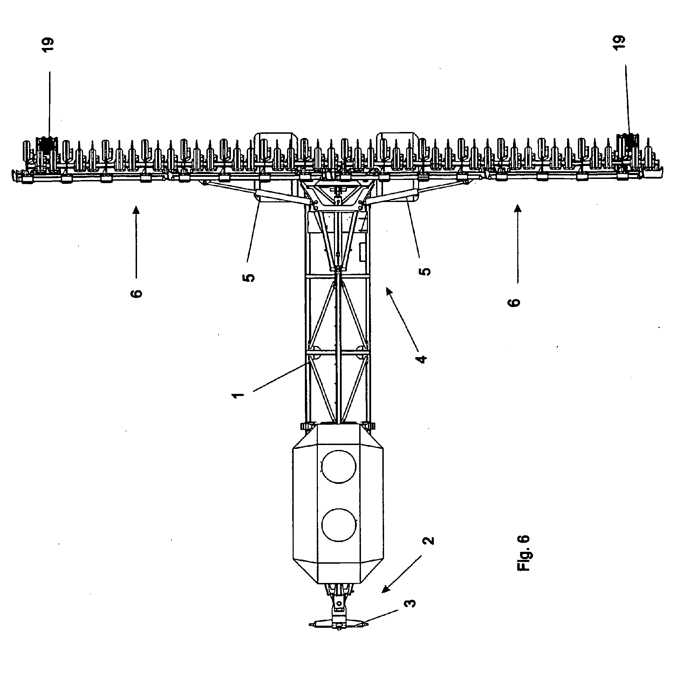

- Fig. 6: das Arbeitsgerät mit hochgeschwenkten Heckrahmen und eingeklappten oberen Teilelementen der Seitenrahmen in Draufsicht,
- Fig. 7: das sich in Transportstellung befindliche Arbeitsgerät in der Draufsicht,
- Fig. 8: das sich in Transportstellung befindliche Arbeitsgerät in der Ansicht von vorne und
- Fig. 9: das Arbeitsgerät in Transportstellung, jedoch mit noch nicht eingeklappten Teilelementen der Seitenrahmen in der Ansicht von vorne.

Das gezogene landwirtschaftliche Arbeitsgerät ist im Ausführungsbeispiel als Großflächensämaschine ausgebildet. Das Arbeitsgerät weist einen Zentralrahmen 1 auf, der auf seiner Vorderseite 2 eine Zugdeichsel 3, die als schwenkbares Kuppelelement zur Ankupplung an die Unterlenker eines Ackerschleppers ausgebildet ist, aufweist. Auf der Rückseite 4 weist der Zentralrahmen 1 ein als sich über auf dem Boden abrollenden und abstützenden Stützelementen ausgebildetes Laufwerk 5 auf. An der Rückseite 4 des Zentralrahmens 1 sind seitlich des Zentralrahmens 1 sich erstreckende Seitenrahmen 6 angeordnet. An den Seitenrahmen 6 sind die als Säelemente 7 ausgebildeten Bodenbearbeitungselemente angeordnet.

An den beiden Seitenrahmen 6 sind jeweils auf deren Vorderseite im äußeren Bereich mittels einer Schwinge 17 über eine Gelenkanordnung 18 als Stützelemente und Tiefenführungselemente ausgebildete Laufräder 19 angeordnet. Zwischen dem jeweiligen Seitenrahmen 6 und der Schwinge 17 sind als Hydraulikzylinder ausgebildete Einstellorgane 20 angeordnet.

Die Seitenrahmen 6 bestehen aus zwei mittels Gelenken 8 miteinander verbundenen Teilelementen 6' und 6'', die in Arbeitsposition der Seitenrahmen 6 in Fahrtrichtung 9 hintereinander angeordnet sind und mittels der Gelenke 8 miteinander verbunden sind. Die Gelenkachsen 10 dieser Gelenke 8 verlaufen quer zur Fahrtrichtung 9. Im Ausführungsbeispiel besteht das hintere Teilelement 6" aus dem hinteren Querbalken 11, an dem die Säelemente 7 der hinteren Querreihe angeordnet sind. Der Querbalken 11 ist mittels der vorerwähnten Gelenke 8 an dem vorderen Teilelemente 6' des Seitenrahmens 6 verdrehbar angeordnet.

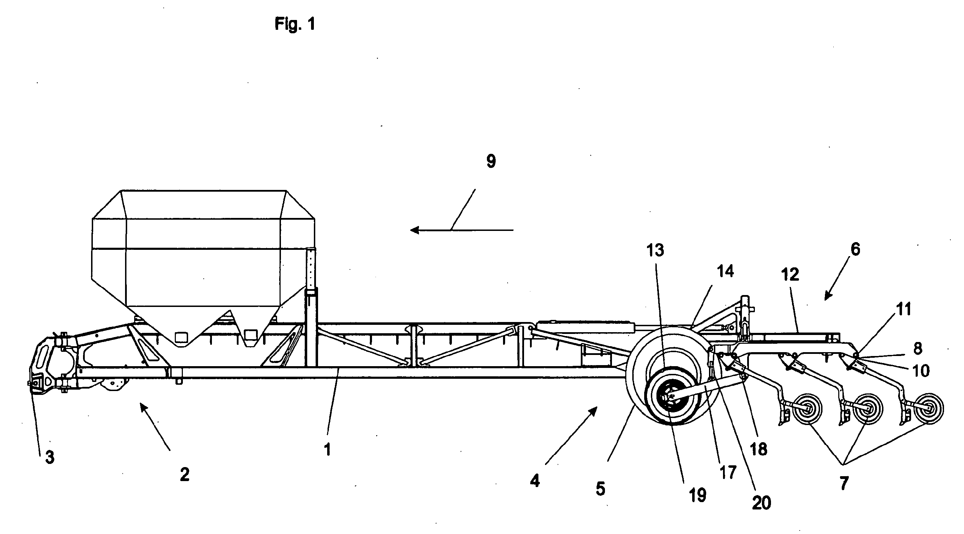

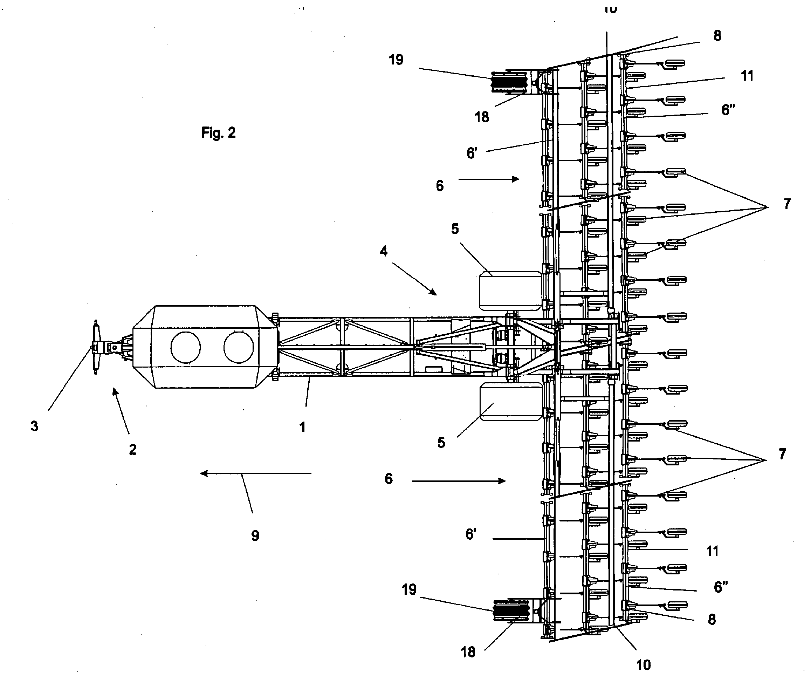

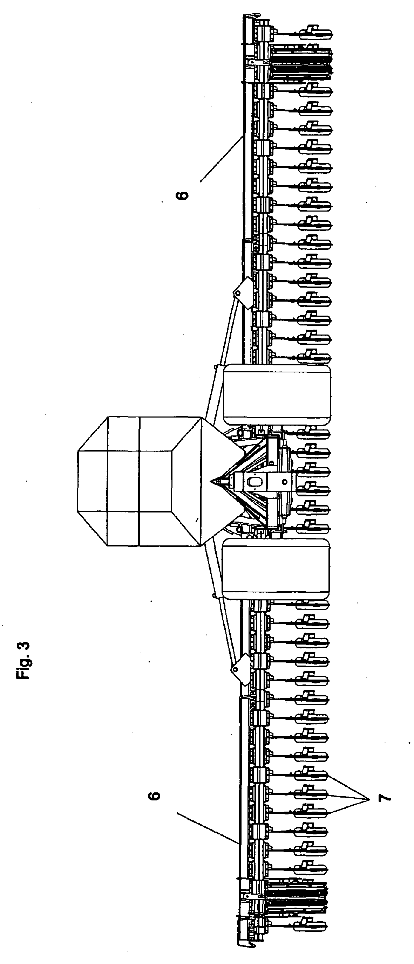

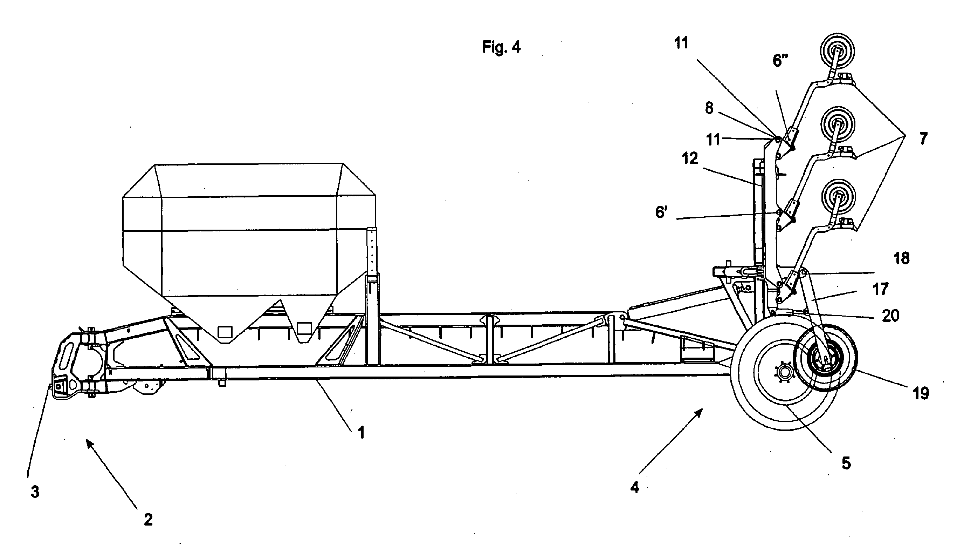

Die beiden Seitenrahmen 6 sind jeweils über einen Zwischenrahmen 12 mittels Gelenken 13 an dem Zentralrahmen 1 angeordnet, wobei die Gelenkachsen 14 der Gelenke 13 sich jeweils im vorderen Bereich der Seitenrahmen 6 befinden und sich horizontal und quer zur Fahrtrichtung 9 erstrecken. Um diese Gelenkachsen 14 können die Seitenrahmen 6 aus der in den Fig. 1-3 dargestellten Arbeitsstellung um 90° nach oben in die in den Fig. 4 dargestellten Position zur Überführung der Seitenrahmen 6 in die erste Phase der Transportposition hochgeschwenkt werden.

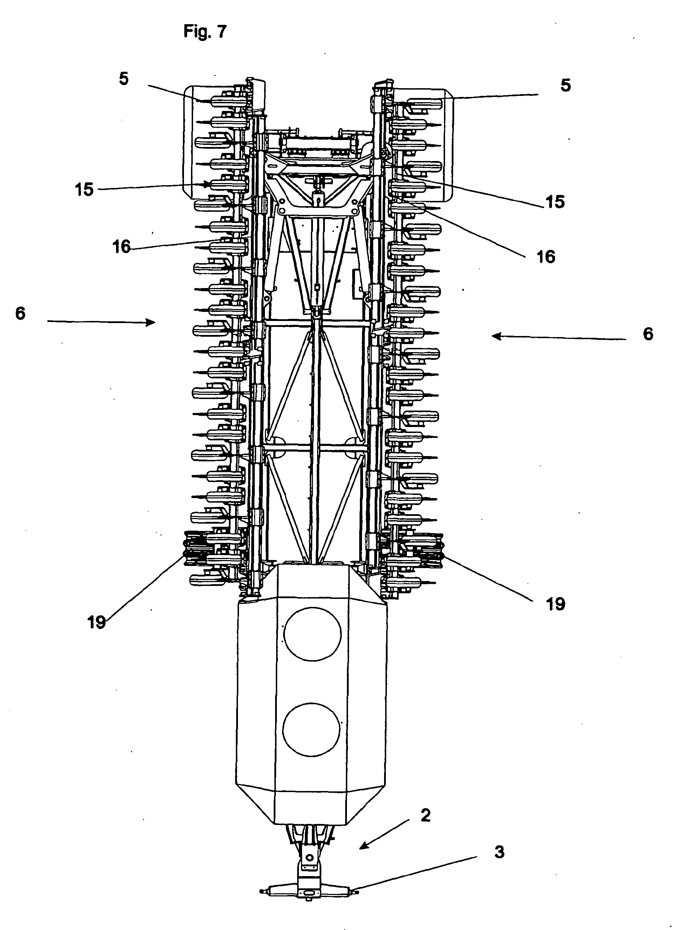

Weiterhin sind die Seitenrahmen 6 unter Zwischenschaltung des Zwischenrahmens 12 mittels Gelenken 15, deren Gelenkachsen 16 in Arbeitsposition der Seitenrahmen 6 in Fahrtrichtung 9 und in der um 90° hochgeschwenkten Stellung senkrecht verlaufen, am Zentralrahmen 1 befestigt. Somit können die Seitenrahmen 6 jeweils um eine sich etwa in ihrem inneren Endbereich befindenden Schwenkachse, die von der Gelenkachse 16 gebildet wird, die in der um 90° nach oben verschwenkten Stellung der Seitenrahmen 6 aufrecht verläuft, um 90° nach vorn in eine parallel zur Fahrtrichtung 9 verlaufende Position verschwenkt werden, wie Fig. 7 zeigt. Anstelle das nach vorn Verschwenken ist es auch möglich, die Seitenrahmen 6 nach hinten zu verschwenken.

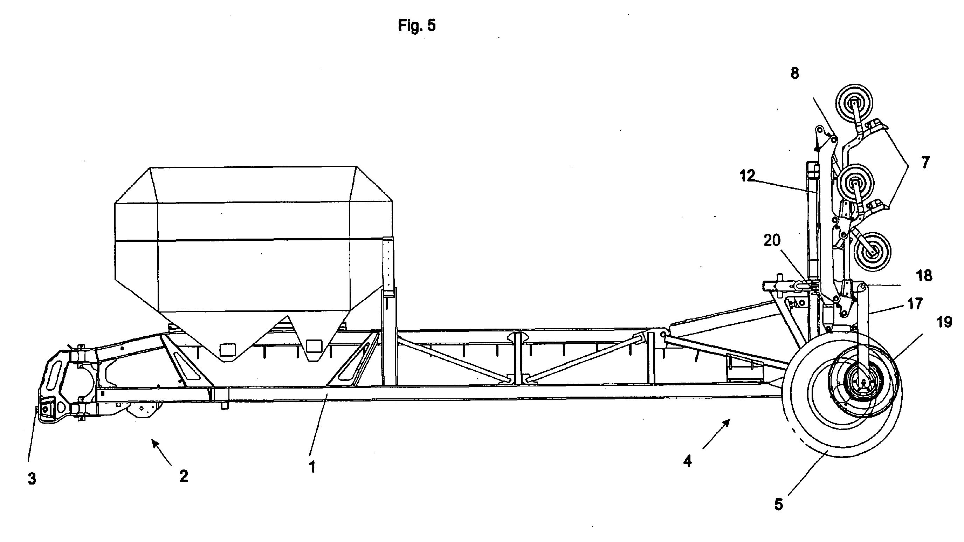

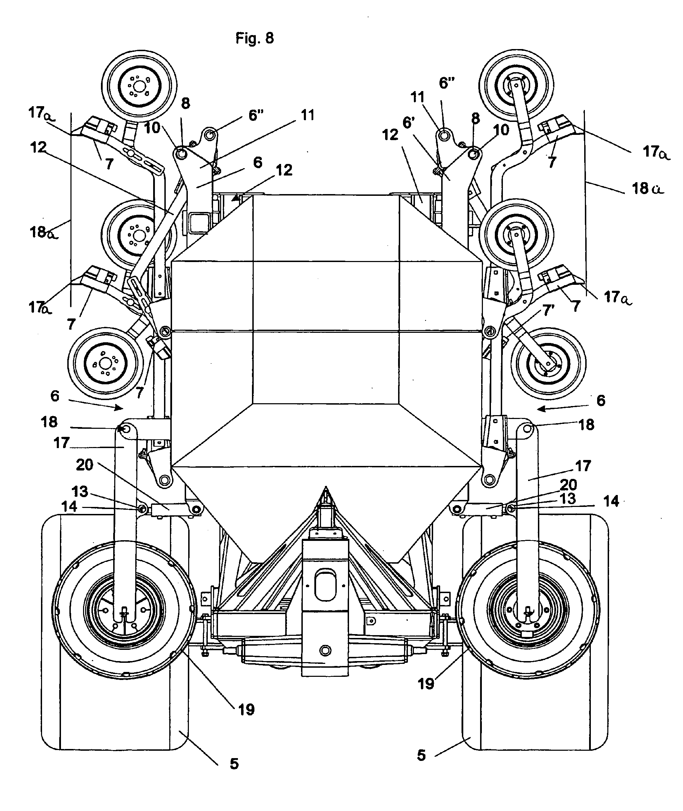

Weiterhin werden die nach dem Verschwenken der Seitenrahmen 6 um die horizontale und quer zur Fahrtrichtung 9 verlaufende Achse 14 oberen Teilelemente 6'' um die Gelenkachse 10 der die Teilelemente 6' und 6'' miteinander verbindenden Gelenke 8 mittels einer nicht dargestellten Stellvorrichtung derart zu dem sich anschließenden Teilelement 6' eingefaltet oder zusammengefaltet, dass das obere Teilelement 6'' und die daran angeordneten Bodenbearbeitungs- und/oder Säelemente 7' nach dem Einfalten sich zumindest annähernd hinter einer auf die freien Enden 17 der an dem sich anschließenden Teilelement 6 angeordneten Bodenbearbeitungs- und/oder Säelemente 7 gelegten Ebene 18 befinden, wie die Fig. 5 und 8 zeigen. Hierbei sind die Teilelemente 6,6'' der Seitenrahmen 6 in Richtung der Seiten, auf denen die Säelemente 7 angeordnet zueinander eingefaltet, wie die Fig. 5 und 8 zeigen. Hierdurch werden die Säelemente 7' des oberen Teilelementes 6'' in dem Bereich der sich an dem vorderen bzw. unteren Teilelement 6' befindlichen Säelemente 7 hinein geschwenkt, so dass sie sich miteinander verzahnen.

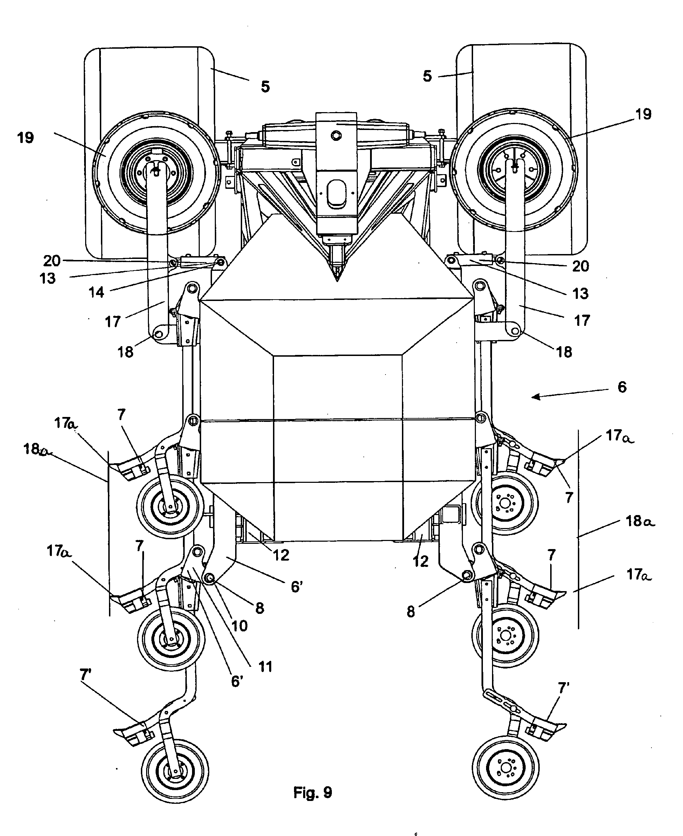

Weiterhin können die Säelemente 7 mittels nicht dargestellter Stellelemente, die als motorische Mittel ausgebildet sein können, beim oder nach überführen der Seitenrahmen 6 in die Transportstellung in Richtung der Seitenrahmen 6 eingezogen werden, wie die Fig. 4, 5, 8 und 9 zeigen.

Auch die als Laufräder 19 ausgebildeten Tiefenführungselemente sind mittels der als Hydraulikzylinder 20 ausgebildete Einstellorgane beim oder nach dem Überfahren der Seitenrahmen 6 in die Transportstellung in Richtung der Seitenrahmen 6 einziehbar, wie die Fig. 4, 5, 7 (auf der in Fahrtrichtung rechten Seite nicht eingezogen, auf der in Fahrtrichtung linken Seite eingezogen) 8 und 9 (hier gilt der für Fig. 7 gemachte Zusatz). Mittels der Einstellorgane 20 sind die Laufräder 19 in der jeweiligen Position festgesetzbar.

## Patentansprüche

1. Gezogenes landwirtschaftliches Arbeitsgerät großer Arbeitsbreite, insbesondere Bodenbearbeitungs- und/oder Sägerät mit einem sich über auf dem Boden abrollenden Stützelementen abstützenden und eine Zugdeichsel aufweisenden Zentralrahmen, wobei an dem Zentralrahmen sich jeweils seitlich des Zentralrahmens erstreckende Seitenrahmen, an dem Bodenbearbeitungs- und/oder Säelemente angeordnet sind, angeordnet sind, wobei die Seitenrahmen gegenüber dem Zentralrahmen jeweils um eine sich im vorderen Bereich der Seitenrahmen befindliche horizontale und sich quer zur Fahrtrichtung erstreckende Achse um 90° nach oben verschwenkbar angeordnet sind, wobei die Seitenrahmen jeweils um eine sich etwa an ihrem inneren Endbereich befindenden Schwenkachse, die in der um 90° nach oben verschwenkten Stellung der Seitenrahmen aufrecht verläuft, um 90° nach vorn oder hinten in eine parallel zur Fahrtrichtung verlaufende Position verschwenkbar sind, wobei die an den Seitenrahmen (6) angeordneten Bodenbearbeitungs- und/oder Säelemente (7) in Richtung der Seitenrahmen (6) mittels Stellelementen (20) einziehbar angeordnet sind, **dadurch gekennzeichnet, dass** auf der Vorderseite im äußeren Bereich der Seitenrahmen (6) mittels einer Schwinge (17) an den Seitenrahmen (6) die Bodenbearbeitungs- und/oder Säelemente (7) in ihrer Eindringtiefe in den Boden führende und als Laufräder ausgebildete Tiefenführungselemente (19) angeordnet sind, dass die Laufräder (19) in Richtung der Seitenrahmen (6) in einziehbarer Weise angeordnet und in der eingezogenen Position festsetzbar sind.

2. Arbeitsgerät nach Anspruch 1, **dadurch gekennzeichnet, dass** die Tiefenführungselemente (19) als auf den Boden abrollende Laufräder (19) und/oder Walzen ausgebildet sind.

3. Arbeitsgerät nach einem oder mehreren der vorstehenden Ansprüche, **dadurch gekennzeichnet, dass** die Laufräder (19) jeweils mittels einer Schwinge (17) über eine Gelenkanordnung (18) am Seitenrahmen (6) angeordnet sind, dass zwischen den Schwingen und den Seitenrahmen (6) Einstellorgane (20) angeordnet sind.

4. Arbeitsgerät nach einem oder mehreren der vorstehenden Ansprüche, **dadurch gekennzeichnet, dass** die den Bodenbearbeitungs- und/oder Säelementen (7) und den Tiefenführungselementen (19) zugeordneten Stellelemente und Einstellorgane als motorische Mittel (20) ausgebildet sind.

## Claims

1. Towed agricultural implement with a wide working width, in particular a soil-working and/or sowing implement, with a central frame which is supported via support elements rolling on the soil and which has a drawbar, wherein side frames which each extend laterally to the central frame and on which soil-working and/or sowing elements are arranged are arranged on the central frame, wherein the side frames are each arranged so as to be pivotable upwards by 90° in relation to the central frame about a horizontal axis which is located in the front region of the side frames and extends transversely with respect to the direction of travel, wherein the side frames are in each case pivotable forwards or rearwards by 90° about a pivot axis, which is located approximately on the inner end region of said side frames and runs vertically in the side-frame position pivoted upwards by 90°, into a position running parallel to the direction of travel, wherein the soil-working and/or sowing elements (7) arranged on the side frames (6) are arranged so as to be retractable in the direction of the side frames (6) by means of actuating elements (20), **characterized in that** depth-guiding elements (19) which guide the soil-working and/or sowing elements (7) in the penetration depth thereof into the soil and are designed as running wheels, are arranged on the side frames (6) on the front side, in the outer region of the side frames (6), by means of a rocker (17), and **in that** the running wheels (19) are arranged retractably in the direction of the side frames (6) and so as to be fixable in the retracted position.

2. Agricultural implement according to Claim 1, **characterized in that** the depth-guiding elements (19) are designed as running wheels (19) and/or rollers rolling on the soil.

3. Agricultural implement according to one or both of the preceding claims, **characterized in that** the running wheels (19) are in each case arranged on the side frame (6) by means of a rocker (17) via a hinge arrangement (18), and **in that** adjustment members (20) are arranged between the rockers and the side frames (6).

4. Agricultural implement according to one or more of the preceding claims, **characterized in that** the actuating elements and adjustment members assigned to the soil-working and/or sowing elements (7) and to the depth-guiding elements (19) are designed as motorized means (20).

## Revendications

1. Engin de travail agricole tracté de grande largeur de travail, en particulier engin de travail du sol et/ou semoir avec un châssis central s'appuyant sur des éléments de support roulant au sol et présentant un timon de traction, des châssis latéraux s'étendant respectivement latéralement au châssis central, sur lesquels sont disposés des éléments de travail du sol et/ou de semis, étant disposés au niveau du châssis central, les châssis latéraux étant disposés de manière à pouvoir pivoter vers le haut de 90° par rapport au châssis central à chaque fois autour d'un axe horizontal se trouvant dans la région avant des châssis latéraux et s'étendant transversalement à la direction d'avance, les châssis latéraux pouvant pivoter de 90° vers l'avant ou vers l'arrière dans une position s'étendant parallèlement à la direction d'avance à chaque fois autour d'un axe de pivotement se trouvant approximativement au niveau de leur région d'extrémité intérieure, ledit axe de pivotement s'étendant verticalement dans la position des châssis latéraux pivotée vers le haut de 90°, les éléments de travail du sol et/ou de semis (7) disposés au niveau des châssis latéraux (6) étant disposés de manière à pouvoir être rentrés dans la direction des châssis latéraux (6) au moyen d'éléments de commande (20), **caractérisé en ce que** sur le côté avant dans la région extérieure des châssis latéraux (6) sont disposés des éléments de guidage en profondeur (19) réalisés en tant que roues de roulement et guidant au moyen d'une bielle (17) au niveau des châssis latéraux (6) les éléments de travail du sol et/ou de semis (7) dans leur profondeur d'enfoncement dans le sol, et **en ce que** les roues de roulement (19) sont disposées de manière à pouvoir être rentrées dans la direction des châssis latéraux (6) et peuvent être fixées dans la position rentrée.

2. Engin de travail selon la revendication 1, **caractérisé en ce que** les éléments de guidage en profondeur (19) sont réalisés sous forme de roues de roulement (19) et/ou de rouleaux roulant sur le sol.

3. Engin de travail selon l'une quelconque ou plusieurs des revendications précédentes, **caractérisé en ce que** les roues de roulement (19) sont disposées à chaque fois au moyen d'une bielle (17) par le biais d'un agencement articulé (18) au niveau du châssis latéral (6), et **en ce qu'**entre les bielles et les châssis latéraux (6) sont disposés des organes de réglage (20).

4. Engin de travail selon l'une quelconque ou plusieurs des revendications précédentes, **caractérisé en ce que** les éléments de commande et les organes de réglage associés aux éléments de travail du sol et/ou de semis (7) et aux éléments de guidage en profondeur (19) sont réalisés sous forme de moyens motorisés (20).
